# EUROPEAN PATENT APPLICATION

(11) **EP 1 156 634 A1**
(43) Date of publication of application: **21.11.2001**
(21) Application number: 00304067.2
(22) Date of filing: 15.05.2000
(51) Int. Cl.: H04L 25/03

(54) **Sequence estimator and equaliser**

(71) Applicant: LUCENT TECHNOLOGIES INC., Murray Hill, New Jersey 07974-0636 (US)
(72) Inventor: Wu, Jian Jun, Reading, Berkshire RG6 3AB (GB)
(74) Representative: Williams, David John

(57) **Abstract**

A reduced state sequence estimator is disclosed having decision making means for making soft decisions on N₁ successive values and hard decisions on N₂ successive values of N successive post cursor values (N₁ + N₂ = N) of symbols input thereto. N multipliers weight the decided values of the N post cursor symbols by weights corresponding to the coefficients of an estimated channel impulse response. The sum of the weighted decided values is subtracted from a current input symbol to provide an input symbol to the means for deciding. A soft decision is made for symbols for which the probability is less sure, so these do not contribute to error propagation.

## Description

This invention relates to sequence estimators and equalisers.

In wireless channels, there may be more than one path from a transmitter to a receiver. Such multiple paths may be due to atmospheric reflection or to refraction from buildings and other objects and may result in fluctuations in received signal level and severe frequency dependent fading. Multipath fading in mobile communications is the main reason for limitation of system capacity.

To counter multipath effects equalisers must be used in GSM systems. Equalisers are thus also necessary for enhanced data rates for GSM evolution (EDGE).

Utilising hard decision iterative equalisers or soft decision iterative equalisers each carry their own attendant advantages and disadvantages. Hard decisions, if they are right, completely remove inter symbol interference. If they are wrong, however, errors propagate through the equaliser one error compounding another. Error propagation is avoided by soft decision equalisers, but they can never completely remove inter symbol interference.

Against this background, a reduced state sequence estimator in accordance with the invention, includes:
decision making means for making soft decisions on N₁ successive values and hard decisions on N₂ successive values of N successive post cursor values (N₁ + N₂ = N) of symbols input thereto;
N multipliers to weight the decided values of the N post cursor symbols by weights corresponding to the coefficients of an estimated channel impulse response; and
means for subtracting the sum of the weighted decided values from a current input symbol to provide an input symbol to the means for deciding. A soft decision is made for symbols for which the probability is less sure, so these do not contribute to error propagation.

N₁ and N₂ are preferably variable, and means is preferably responsive to bit error rate to vary N₁ and N₂ so that N₁ increases as the bit error rate increases and decreases and the bit error rate decreases.

GSM uses GMSK to achieve a rate of 22.8 kbits/s per time slot. EDGE uses 8-PSK to achieve 69.2 kbits/s pre time slot.

In GSM systems, using a 5 tap model of the channel, the equaliser has 2⁴ = 16 possible states. However, in EDGE systems using a 5-tap model of the channel results in the equaliser having 8⁴ = 4096 possible states. This is too complex to be practically realisable.

Reduced state equalisers have been proposed, see for example M.V.Eyuboglu & S.U.H. Qureshi, "Reduced-State Sequence Estimation with Set Partitioning and Decision Feedback", IEEE Transactions on Communications, Vol. COM-36, Jan. 1988, pp. 13-30; Duel-Hallen & C. Heegard, "Delayed Decision-Feedback Sequence Estimation", IEEE Transactions on Communications, Vol. COM-37, May 1989, pp. 438-436; and J.Wu, A.H. Aghvami, "A New Adaptive Equalizer with a Channel Estimator for Mobile Radio Communications" IEEE Transaction on Vehicular Technology, August 1996, pp. 467-474.

A problem with reduced state equalisers is that they do not perform well in the presence of precursors in the channel impulse response.

The invention extends to an equaliser, comprising:
a first channel estimator responsive to a sequence of input symbols received from a transmission channel, to make a first estimate of the coefficients of the channel impulse response;
a first reduced state sequence estimator responsive to the sequence of input symbols and to the estimated channel coefficients to provide first soft output decisions on the symbol values;
a second channel estimator responsive to the first soft output decisions from the first sequence estimator to make a second estimate of the coefficients of the channel impulse response;
an N position buffer for storing the first soft output decisions corresponding to N possible precursors in the channel impulse response;
N multipliers to weight the buffered first output probabilities by weights corresponding to coefficients of any corresponding precursors in the second channel estimation;
a subtractor for subtracting the sum of the weighted first output probabilities from the input symbols to produce a sequence of difference signals;
and a second reduced state sequence estimator responsive to the sequence of difference signals and to the channel estimation to provide second soft output decisions on the symbol values,
one or both reduced state sequence estimators being in accordance with the invention.

Removing or reducing the precursors for the second sequence estimation significantly reduces errors. In addition, the second channel estimation can be carried out using the whole sequence as quasi-known, not just the midamble or training sequence.

One embodiment of the invention will now be described with reference to the accompanying drawings, in which:

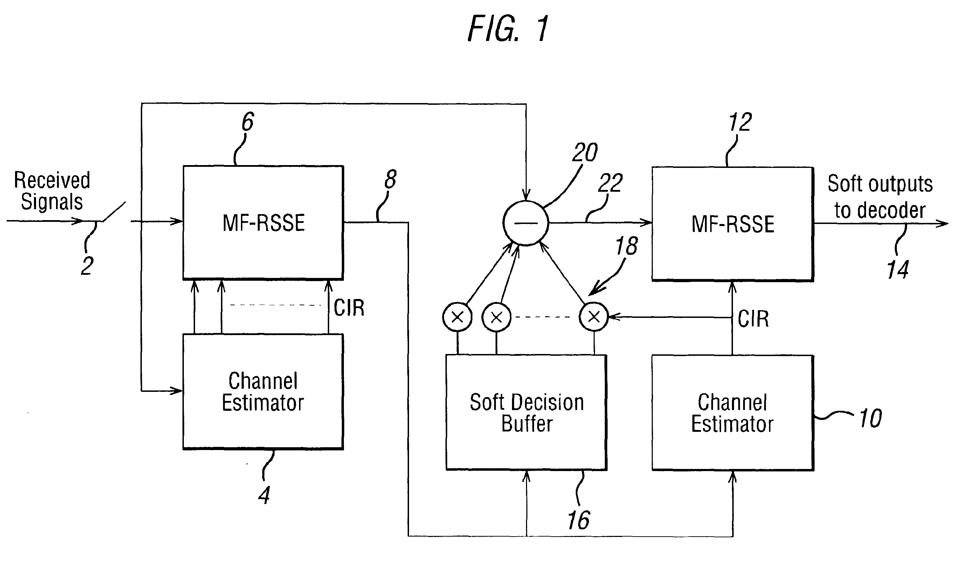

Figure 1 is a block diagram of an iterative reduced-state equaliser embodying the invention; and
Figure 2 is a block diagram showing details of a mixed soft and hard decision feedback reduced-state sequence equaliser used in the iterative equaliser of Figure 1.

Signals received from a multipath transmission channel are input to the equaliser at 2. The signals are fed to a channel estimator 4 which functions to provide a first estimate of the coefficients of the impulse response of the channel on the basis of the 26 known training bits , i.e. the mid-amble. The first estimated coefficients are used to set tap weights in a first mixed soft and hard decision feedback reduced-state sequence estimator (MF-RSSE) 6. The estimator 6 provides probabilities on the values of successive symbols in the input signals at an output 8, i.e. soft decisions.

The soft decisions are fed to a second channel estimator which is now able to estimate the channel on the basis of all the symbols represented by the sequence of soft decisions, not just the training sequence. A better estimation of the channel coefficients is thus obtained. The second estimate of the coefficients is used to set tap weights in a second mixed soft and hard decision feedback reduced-state sequence estimator 12. The estimator 12 provides probabilities on the values of successive symbols in the input signals at an output 14, i.e. soft decisions.

Mixed soft and hard decision feedback reduced-state sequence estimators are most effective when the channel response is minimum phase, that is to say when the strongest signal received from the multiple paths, is the first received. The reliability is reduced when the impulse response is non-minimum phase, i.e. contains precursors. In order to greatly improve the reliability of the output of the second MF-RSSE 12, the precursors are truncated, that is reduced or removed.

To that end the soft N decisions output from the first estimator 6 are buffered in a buffer 16. N represents the number of paths which the equaliser is intended to deal with, in the case of EDGE that is 5. Those soft decisions determined by the channel estimator 10 to be precursors to the current symbol are multiplied in multipliers, by a weight corresponding to their channel coefficient and subtracted by a subtractor 20 from the symbols received at 2. The output at 22 of the subtractor 20 are fed to the second MF-RSSE 12.

The soft decisions output at 14 are improved over the first decisions at 8, because:
1. known and quasi-known values for all symbols are used to estimate the channel coefficient; and
2. any precursors are removed or reduced.

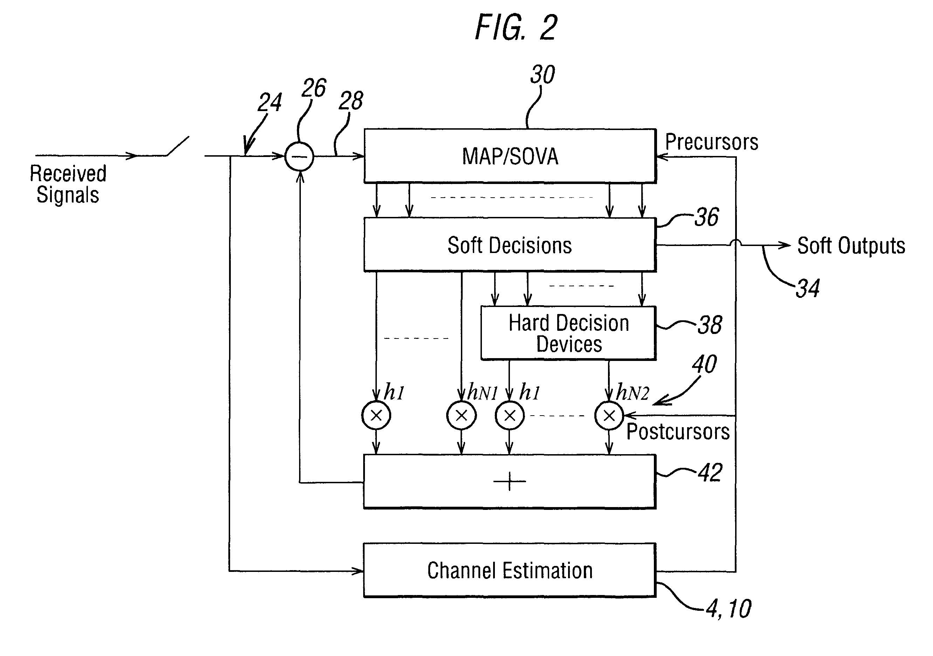

The equaliser is further improved by using the MF-RSSEs 6 and 12 shown in more detail in Figure 2. Here the received sequence at 2 or 22 is fed to an input 24. A feedback signal is subtracted from the current input symbol by subtractor 26 and the resulting difference signal at 28 is input to a maximum a posterior (MAP) algorithm or soft output Viterbi algorithm (SOVA) 30. Either algorithm gives soft decisions of successive symbols on output 32. N successive decisions, corresponding to the postcursor positions in the estimated channel coefficients, are buffered in a soft decision buffer 36.

The N buffered soft decisions are processed to produce the feedback signal input to the summer 26. As the soft decision corresponding to a particular original received symbol progresses through the algorithm 30, the decision becomes more certain, being most certain, for that particular symbol, when the soft decision is output at 34. The soft decisions buffered in the buffer 36 therefore range from least certain at one end to most certain at the other.

If the effect of a soft decision in the is fairly certain, it is converted to a hard decision by a hard decision device 38. Less certain soft decisions are left as soft decisions and the mixture of soft and hard decisions is fed to multipliers 40 where each is multiplied by the respective channel coefficient *h*. The products are summed in summer 42 to produce the feed back signal which is subtracted from the current symbol in the subtractor 26.

In general, N₁ less certain decisions are left as soft decisions and N₂ more certain soft decisions are converted to hard decisions (N₁ + N₂ = N). The soft decisions output at 34 are fed to a channel decoder (not shown) the output of which is monitored to determine the bit error rate. If the bit error rate falls below a first predetermined level, the size of N₁ is increased. That is, more decisions are left as soft decisions. If the bit error rate is above a predetermined level, N₂ is increased. That is, the number of hard decisions is increased.

## Claims

1. A reduced state sequence estimator, including:
decision making means for making soft decisions on N₁ successive values and hard decisions on N₂ successive values of N successive post cursor values (N₁ + N₂ = N) of symbols input thereto;
N multipliers to weight the decided values of the N post cursor symbols by weights corresponding to the coefficients of an estimated channel impulse response; and
means for subtracting the sum of the weighted decided values from a current input symbol to provide an input symbol to the means for deciding.

2. A reduced state sequence estimator as claimed in claim 1, wherein N₁ and N₂ are variable, and including means responsive to bit error rate to vary N₁ and N₂ so that N₁ increases as the bit error rate increases and decreases and the bit error rate decreases.

3. An equaliser, comprising:
a first channel estimator responsive to a sequence of input symbols received from a transmission channel, to make a first estimate of the coefficients of the channel impulse response;
a first reduced state sequence estimator responsive to the sequence of input symbols and to the estimated channel coefficients to provide first soft output decisions on the symbol values;
a second channel estimator responsive to the first soft output decisions from the first sequence estimator to make a second estimate of the coefficients of the channel impulse response;
an N position buffer for storing the first soft output decisions corresponding to N possible precursors in the channel impulse response;
N multipliers to weight the buffered first output probabilities by weights corresponding to coefficients of any corresponding precursors in the second channel estimation;
a subtractor for subtracting the sum of the weighted first output probabilities from the input symbols to produce a sequence of difference signals;
and a second reduced state sequence estimator responsive to the sequence of difference signals and to the channel estimation to provide second soft output decisions on the symbol values,
one or both reduced state sequence estimators being as claimed in claim 1 or 2.
